Europäisches Patentamt

European Patent Office

Office européen des brevets

(19)

(11) Publication number: **0 123 447 B1**

(12) **EUROPEAN PATENT SPECIFICATION**

(45) Date of publication of patent specification: **15.05.91**   (51) Int. Cl.⁵: **A01G 9/24, F24F 3/14**

(21) Application number: **84302023.1**

(22) Date of filing: **26.03.84**

Divisional application 89119906.9 filed on
26/03/84.

(54) Method of and means for controlling the condition of air in an enclosure.

(30) Priority: **25.03.83 US 479009**

(43) Date of publication of application:
**31.10.84 Bulletin 84/44**

(45) Publication of the grant of the patent:
**15.05.91 Bulletin 91/20**

(84) Designated Contracting States:
**BE DE FR GB IT NL**

(56) References cited:
**EP-A- 0 038 213**
**DE-A- 2 844 935**
**FR-A- 2 428 211**
**US-A- 2 405 169**

(73) Proprietor: **Geophysical Engineering Company**
**1201 Third Avenue 40th Floor**
**Seattle, Washington 98101-3099(US)**

(72) Inventor: **Assaf, Gad**
**Rehov Kosover 5**
**Rehovot(IL)**

(74) Representative: **Sturt, Clifford Mark et al**
**MARKS & CLERK 57-60 Lincoln's Inn Fields**
**London WC2A 3LS(GB)**

## Description

This invention relates to a method of and means for controlling the condition of air in an enclosure, and more particularly for controlling the temperature and humidity of air in an enclosure such as a greenhouse.

Agricultural products, such as vegetables and flowers, are grown on a large scale in greenhouses throughout the world. During daylight hours, growing agricultural products introduce water vapor into the greenhouse and extract carbon dioxide from the air. The growth of such products is enhanced when excess carbon dioxide is introduced into the greenhouse during daylight hours. This can be accomplished, particularly if heat is needed during the day, by burning LPG or natural gas and passing the products of combustion directly into the greenhouse. Water heated by burning the fuel can be stored during the day to provide a reservoir of heat that can be released during the night time to heat the greenhouse. The primary deficiency with this approach is the water vapor contained in the flue gases. When this water vapor is added to the water vapor produced by the growing agricultural products, saturated, or nearly saturated conditions are created within the greenhouse. This condition of high humidity produces undesirable stress on all but tropical plans, and increases susceptibility of the plants to various diseases whose control requires periodic spraying or other treatment. As a consequence, considerable resistance has been encountered in applying this approach to greenhouse management.

The prior art, U.S. Patent No. 4,265,300, provides for burning LPG or LNG to produce air at about 1100°C which is mixed with air selectively drawn from both inside and outside a greenhouse, the ratio of inside to outside air being determined by a valve arrangement under the control of a thermostat. With this arrangement, warm air in the range 5° to 35°C can be supplied to the greenhouse when ambient conditions are as low as -45°C. Prior to its injection into the greenhouse, the air is conditioned by adding an appropriate amount of oxygen, by adding more heat or by extracting heat, and by dehumidification. Because the arrangement in this patent is not used in summertime, this patent does not address the basic problem of how to add excess carbon dioxide to a greenhouse during daylight hours in the summer without also adding excess water vapor which is deleterious to plant health. Furthermore, this patent does not address the problem of heating a greenhouse at night during the summer in arid regions of the world.

Zamir Levav and Arbel From, of the Israel Agricultural Research Organization, P. O. Box 6, Beit Dagan, Israel, have proposed an arrangement suitable for arid environments where, during the summer, a greenhouse must be heated at night. They proposed continuously exchanging water between a fresh water reservoir and a spray head in the greenhouse. During the day, the sprayed water would be cooler than the air in the greenhouse causing excess water vapor in the greenhouse, created by evapotranspiration of plants therein, to condense on the cooler water spray thus dehumidifying the air in the greenhouse and simultaneously cooling it. Warmed water from the spray is returned to the reservoir; and the water sprayed into the greenhouse at night is thus warmer than the air in the greenhouse. Consequently, heat absorbed by the water spray during the day for dehumidifying and cooling the greenhouse is returned to the greenhouse at night. This arrangement is very energy efficient, but is not satisfactory because, at night, the spray produces saturated conditions; and the 100% relative humidity has adverse effects on the plant.

The use of a brine spray for dehumidification is well known and is illustrated, for example, in U.S. Patent No. 2,405,169. Here, a refrigeration system is proposed employing a brine spray. which is first exposed to atmospheric air from within an enclosure for absorbing moisture therefrom, and is then heated, as by a boiler, to enable it to release this moisture when sprayed in a regeneration chamber. In the system of U.S. Patent No. 2,405,169. cooling is produced by passing air through a chamber wherein water is caused to evaporate due to the presence of concentrated brine adjacent thereto. This arrangement may be applicable to conditioning the air in a greenhouse, but it is very inefficient from an energy consumption standpoint.

Published European Patent Application 0038213 (Agri-Projects International Ltd) discloses a system for the control of temperature and humidity within a greenhouse. This system relies on a heat pump and various sensors located both inside and outside the greenhouse. Control logic uses information from the sensors to optimise the temperature and humidity of the air in the greenhouse, in accordance with ambient weather conditions. The expense and susceptibility to failure of the sensors and control logic are obvious disadvantages of this system.

US Patent 4,165,125 discloses apparatus for conditioning the air in a greenhouse using a heat exchanger supplied with concentrated brine. The apparatus includes a reservoir of brine with concentrated brine being supplied to a direct contact dehumidifier. This arrangement is used for both cooling and warming the greenhouse. However, the brine is refrigerated and heat extracted during cooling is not stored, with consequential loss of efficiency.

It is therefore an object of the present invention to provide a method of and an apparatus for controlling the condition of air in an enclosure such as a greenhouse following the steps of claim 1 and having the features of claim 12, where the disadvantages of the prior art are substantially overcome or reduced.

The present invention provides for conditioning air in a greenhouse subject to diurnal heat fluxes due, in part, to solar isolation and evapotranspiration of plants in the greenhouse during the day, and cooling at night. The invention involves condensing water vapor in the air in the greenhouse during the day such that the latent heat of condensation is converted into sensible heat, accumulating the sensible heat during the day, and returning sensible heat to the air in the greenhouse during the night without adding water vapor to the air. Specifically, concentrated brine is cycled between a reservoir where brine is stored and a direct-contact heat exchanger in the greenhouse where the brine is contacted with air. During the day, water vapor in the air condenses on the brine in contact with the air; and the latent heat of condensation is absorbed by the brine whose temperature is thus raised increasing the sensible heat of the brine. During the night, the air contaoted by the brine is cooler than the brine and is thus heated.

The brine is sufficiently concentrated, and the reservoir is sufficiently large, to maintain the temperature of the brine entering the heat exchanger during the day at a level at which the vapor pressure at the air/brine interface is less than the vapor pressure of the air in the greenhouse. As a result, the brine will be hygroscopic and water vapor in the air will condense On the brine. Periodically, condensed water vapor is removed to reconstitute or regenerate the brine. In one technique, removal of water from the brine occurs in a seasonal cycle, e.g., from winter to summer using an evaporating pond. In another technique, brine in the reservoir is heated.

Embodiments of the invention are shown in the accompanying drawings wherein:

Fig.1 is a schematic block diagram of an arrangement for removing water vapour from a greenhouse and heating the greenhouse using a brine dehumidifier;

Fig. 2 is a schematic illustration of apparatus for controlling temperature and humidity within an enclosure constructed and operative in accordance with an embodiment of the present invention;

Figs. 3A and 3B each illustrate an alternative embodiment of the brine-vapor-air heat exchanger useful in the invention; and

Figures 4A, 4B, 4C and 4D illustrate alternative embodiments of brine heat sources and vapor sinks useful in the invention.

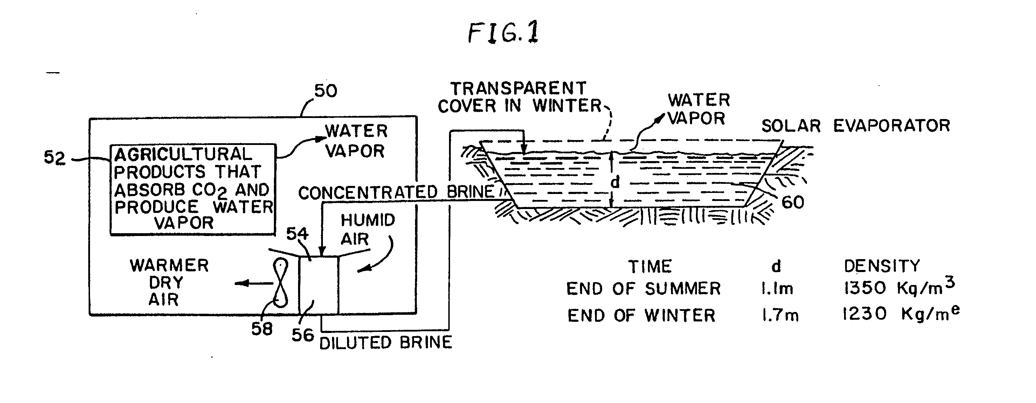

Fig. 1 is an embodiment of the invention by which a brine dehumidifier according to the present invention is used to dehumidify the air in a greenhouse and to extract and store sensible heat from the air during the day, and to give back the sensible heat to the air during the night for the purpose of heating the greenhouse. In this embodiment, regeneration of the brine is achieved on an annual basis using solar energy.

Reference numeral 50 designates a greenhouse containing agricultural products 52 that produce water vapor during the day. Duct 54 contains brine dehumidifier 56 through which air in the greenhouse is recirculated by reason of the operation of fan 58. Dehumidifier 56 operates such that concentrated brine contained in a reservoir 60 is applied to the dehumidifier so that the brine and humid air come into direct contact. By reason of the hygroscopic nature of brine, water vapor in the air in the greenhouse condenses on the brine diluting the same.

During daylight hours when the temperature within the greenhouse is some $10°C$ higher than the temperature at night, a considerable amount of sensible heat contained in the air in the greenhouse is absorbed by the brine which increases in temperature. At the same time, the brine also absorbs the latent heat of condensation of the water vapor contained in the air. For example, if the temperature within the greenhouse during the day is about $27°C$ and the brine temperature at the inlet is about $25°C$, a $5°C$ increase in the brine temperature to about $30°C$ can occur. With a flow rate of about $30m^3/h$ per $1000 \ m^2$ of greenhouse area, about 1200 kWh of heat will be removed from the air and stored in the brine. The heated, diluated brine is delivered to reservoir 60.

At night, when the temperature of the greenhouse drops by about $10°C$, the temperature of the concentrated brine entering the dehumidifier will be about $30°C$; and in this case, the sensible heat from the brine is transferred to the air which is thus heated. About $5°C$ temperature drop of the brine will occur; and diluted brine, at about $25°C$ is delivered to reservoir 60. Thus, at night, the brine will give up about the same amount of heat as was absorbed during the day.

During the beginning of the winter season, the concentration of the brine may be about 50%. After the winter season it would be diluted to about 30%. This difference in salinity represents the latent heat of condensation made available for heating during nights of the winter; and this heat must be restored to the brine in order to regenerate it. Regeneration is achieved during the summer. Reservoir 60 acts as an evaporator wherein the water vapor accumulated during the winter evaporates thereby concentrating the brine.

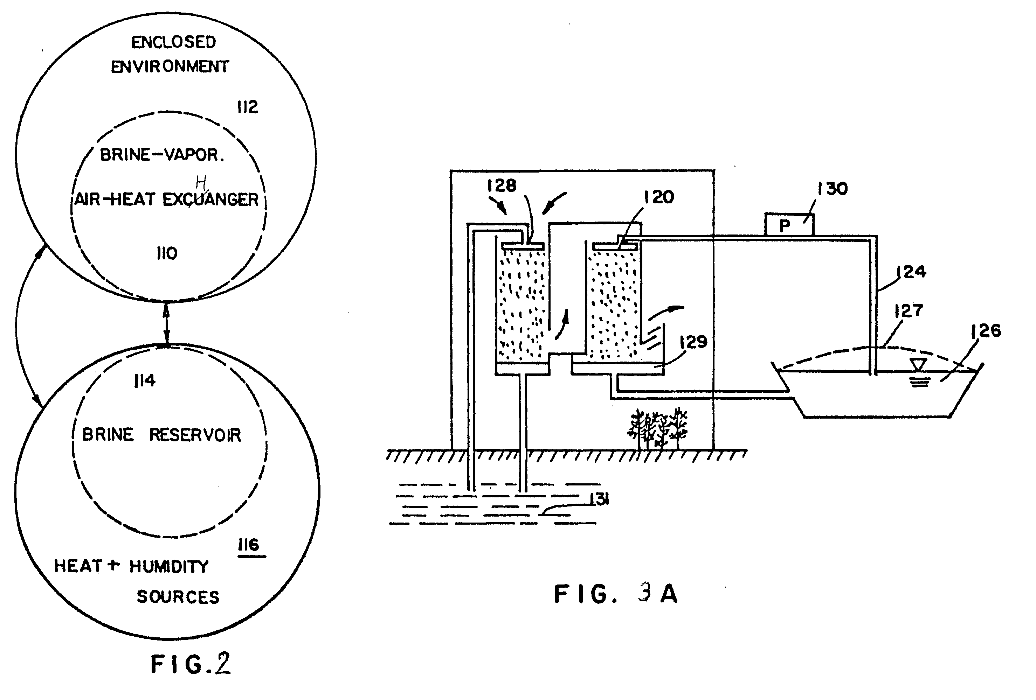

Reference is now made to Fig. 2 which illustrates, in schematic form, apparatus for humidity and temperature control of an environment employing brine as the heat transfer medium in accordance with the present invention. The apparatus comprises a brine-vapor-air heat exchanger 110 disposed within enclosed environment 112, such as a room, greenhouse or vehicle, or in communication therewith. Brine is supplied to heat exchanger 110 from brine reservoir 114 which is associated with sources 116 and/or sinks of heat and/or humidity for governing the temperature and concentration of the brine supplied to the brine-vapor-air heat exchanger.

The present invention involves a particular appreciation that, because the vapor pressure of the air/brine interface is lower than that of water at the same temperature, brine may be used to heat an environment while at the same time absorbing moisture therefrom. The condensation of moisture from the surrounding environment on the brine converts the latent heat of condensation to sensible heat and further heats the brine. Extremely efficient heating of an environment is thus provided in accordance with an embodiment of the present invention.

According to a preferred embodiment of the invention, reservoir 114 provides sufficient brine storage capacity to enable the brine to be concentrated by solar heat provided by diurnal temperature gradients over time in the ambient environment. These gradients may be relatively short term as between day and night, or between sun and shade, or alternatively they may be longer term, as between summer and winter.

Reference is now made to Fig. 3A which illustrates an embodiment of brine-vapor-air heat exchanger constructed and operative in accordance with another aspect of the present invention and comprising brine spray head 120 coupled to source of brine 124 which is coupled, in turn, to brine reservoir 126 which, typically, may be a solar evaporation pond. Removable covering 127 may be provided for protecting the pond from rain and resulting dilution of the brine stored therein. The cover also serves to retain heat in the brine when the brine is used for heating.

According to a preferred embodiment of the invention, particularly suitable for space heating of an enclosed environment, air first passes through water spray 128, or is otherwise exposed to a source of water vapor such as produced by growing plants. The air then passes through a spray of brine provided by spray head 120. The brine spray falls by gravity in direct contact with the air to be treated and collects in receptacle 129. Depending on the relative vertical orientation of the elements of the system, pump 130 may be provided to circulate the brine from the brine reservoir 126 through heat exchanger spray head 120.

According to one embodiment of the invention, the brine reservoir may be located outside of the enclosed environment whose temperature and humidity it is desired to control. According to an alternative embodiment of the invention, the reservoir may be located within the enclosed environment.

Water spray 128 may be supplied with water from any suitable source including, for example, warm water aquifer 131. Alternative, water spray 128 may be replaced by any other source of water vapor, such as growing plants located within the enclosed atmosphere. The presence of a vapor source is important when the brine-vapor-air heat exchanger is being used in a heating mode because it provides vapor for condensation on the brine, thus releasing latent heat of condensation, which is converted into sensible heat as the temperature of the brine is raised. When cooling is desired, the heat sources maintaining the vapor sources at a constant temperature would be eliminated, insofar as possible, and the heat of evaporation would be removed as quickly as possible from the enclosure.

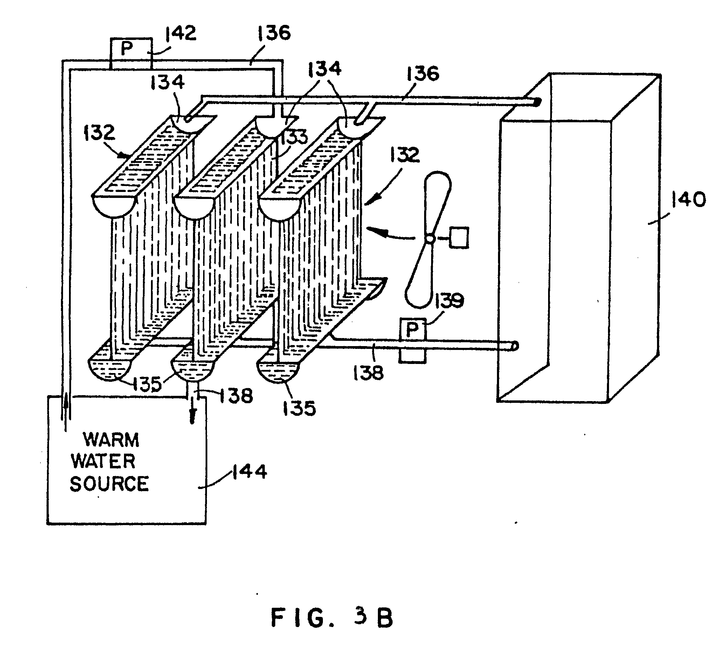

Reference is now made to Fig. 3B which illustrates a different type of brine-vapor-air heat exchanger comprising a plurality of elongated falling brine film assemblies 132 operating adjacent an elongated falling water film assembly 133. Each of the falling film assemblies comprises a supply trough 134 and a receiving trough 135 and supply and drainage conduits 136 and 138. The brine or water, as the case may be, falls from the supply troughs 134 through elongated slits formed in the bottom thereof in a generally planar film to the receiving troughs 135. According to a preferred embodiment of the invention, a web of material, such as woven jute, may be provided to define the film path and to enable relatively slow travel of the brine film therealong. Alternatively, any other material having capillary characteristics for slowing the brine flow under gravity may be used.

According to an alternative embodiment of the invention, the material may communicate with the top of supply trough 134 and thus eliminate the need for provision of slits in the bottom thereof. Pump 139 serves to circulate the brine as desired reservoir 140. Another pump 142 may be provided to circulate water from a vapor source such as a warm water aquifer 144 to assembly 133. The principle of operation of the apparatus of Fig. 3B is substantially similar to that of the apparatus of Fig. 3A It is appreciated that in both cases, the water serving as the vapor source may be supplied at a temperature below the temperature of the environment, because the brine, having a lower vapor pressure than the water at the same temperature, acts as a heat pump in causing the vapor to evaporate on the brine, releasing the latent heat of condensation to the brine. Normally the vapor source should provide water at 10° C. or more above ambient temperature.

It is appreciated that in the course of circulation through the heat exchanger in contact with vapor, the brine will pick up moisture and become diluted. The more diluted it becomes, the more its vapor pressure will increase and approach that of water. Consequently, the ability of the diluted brine to pick up additional moisture and release latent heat of condensation decreases with time. Therefore, it is necessary to concentrate the brine so as to maintain its concentration at an acceptable level.

It is a particular feature of the present invention that sufficient brine is provided for circulation through the heat exchanger such that the condensation heat capacity thereof is sufficient to provide desired heating over a period of time, say a season, without requiring other than seasonal concentration of the brine to restore its desired properties. It is also a particular feature of the invention that a brine reservoir of sufficient capacity is provided such that a sufficient quantity of brine at a desired temperature and concentration is available so that desired heat and humidity control can be effected without requiring the use of fossil fuels to reconstitute the brine (i.e., concentrate it).

More particularly, it is a particular feature of the present invention that sufficient brine reservoir capacity is provided such that diurnal temperature gradients occurring naturally, such as day/night, sun/shade or seasonal temperature gradients can be used to reconstitute the brine.

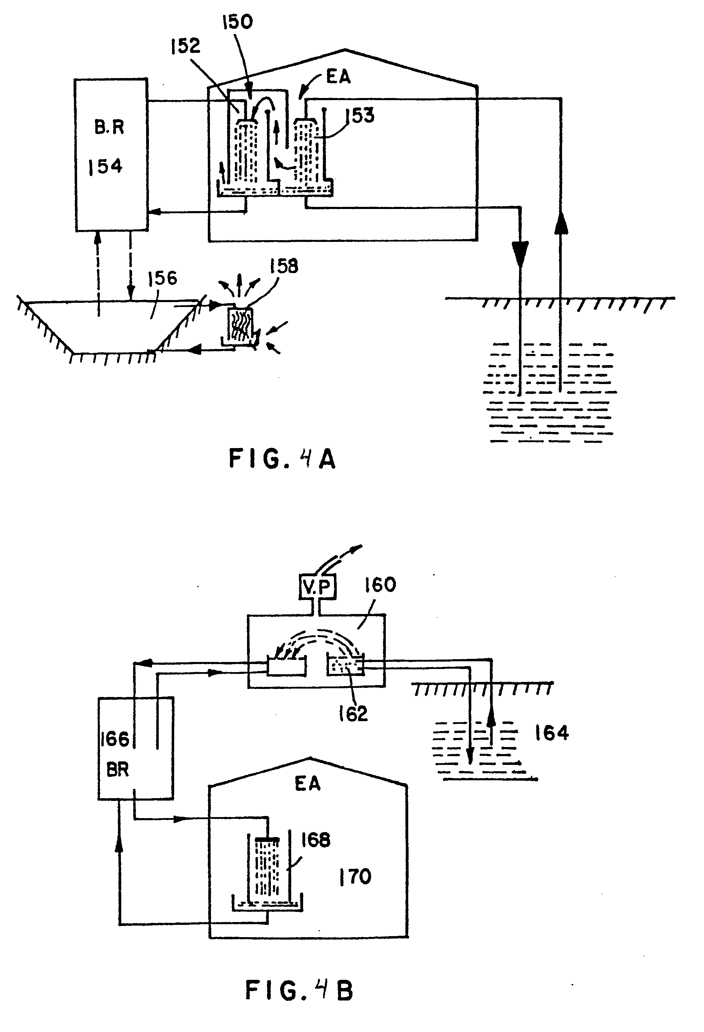

Reference ia now made to Figs. 4A-4D which illustrate various systems for concentrating brine in association with heat-exchanger apparatus. In the embodiment of Fig. 4A brine-vapor-air heat exchanger 150, comprises water and brine spray heads 152 and 153 arranged so as to define an air circulation path therepast such that the air travels parallel to the direction of the spray. Heat exchanger 150 is coupled to brine reservoir 154 which may comprise, or be connected to, solar evaporation pond 156. Typically, pond 156 comprises an open basic filled with brine and exposed to direct sunlight which causes heating and consequent evaporation of the brine. The rate of evaporation of the brine may be enhanced by circulation thereof through cooling tower 158. Such a cooling tower typically comprises apparatus for permitting the brine to contact air with a high surface area-to-volume ratio and may employ a brine spray.

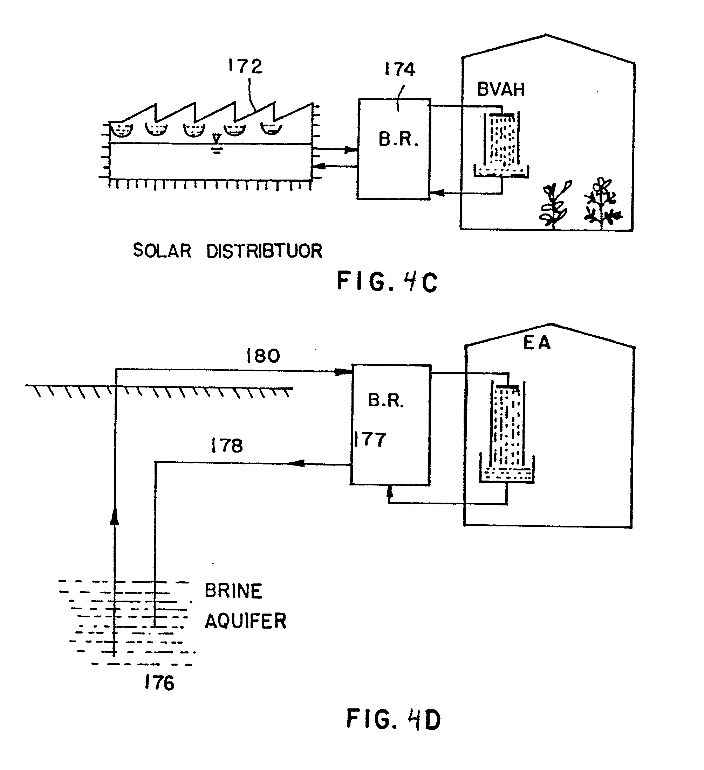

Referring now to Fig. 4B, flash evaporator and condenser 160 is employed for heating and concentrating brine in the presence of vapor source 162 coupled to a warm water reservoir 164. Condenser 160 is coupled to a brine reservoir 166 which in turn communicates with a brine-vapor-air heat exchanger 168 located within enclosure 170. Fig. 4C illustrates a solar distiller 172 for heating and concentrating brine supplied thereto from a brine reservoir 174.

Fig. 4D illustrates an alternative embodiment of concentrated brine supply wherein brine aquifer 176 is employed as a virtually limitless supply of concentrated brine. The dilute brine is recycled from brine reservoir 177 to the aquifer via conduit 178, while concentrated brine is supplied to the reservoir via conduit 180.

According to an alternative embodiment of the invention, a reservoir may be located at the inlet to the brine evapartor, particularly where that evaporator is not in the form of a solar evaporation pond. It is a particular feature of the present invention that the reservoir or reservoirs and the overall brine supply should be of sufficient capacity to enable evaporation and cooling of the brine to be carried out primarily by naturally occurring temperature gradients.

In the preceding discussion, mention has been made of the significant energy storage potential of concentrated brine. The following brief discussion is intended to provide an illustration of the quantities of energy which can be stored in a typical application.

It is known that evaporation of Dead Sea brine over a summer can increase its density from approximately 1200 to approximately 1350 $Kg/m^3$ at a temperature of about 35° C. At a density of 1350 $Kg/m^3$, the brine has a vapor pressure which is 35% of that of water at the same temperature, while at a density of 1200 $Kg/m^3$, the brine has a vapor pressure which is 75% of that of water at the same temperature. The solution of brine from 1350 $Kg/m^3$ involves the condensation of 650 Kg of water per $m^3$ of brine. This condensation releases 440 Kwh of heat per $m^3$ in the form of latent heat of condensation which is converted to sensible heat of the brine. It will be appreciated. therefore, that a reservoir of 1000 $m^3$ of Dead Sea brine has a condensation heat capacity for operation in a humidity range of 35% - 75% of 440,000 Kwh.

## Claims

1.   A method for conditioning air, containing water vapour, in an enclosure (50) by exchanging a fluid between a reservoir (60) and a heat exchanger (56) which is located in the enclosure (50), comprising the steps of using the fluid to extract heat from the air in the enclosure (50) during a first period, storing the extracted heat in the fluid in the reservoir (60) and using the fluid and the heat exchanger (56) to return stored heat to the air in the enclosure (50) during a second period without adding water vapour to the air, characterised by selecting the fluid to be brine, selecting the heat exchanger (56) to be of the direct contact type, selecting the first period to be day, selecting the second period to be night and by arranging for the brine to remain hygroscopic during the day.

2. A method according to claim 1 characterized in that the brine is concentrated.

3. A method according to claim 2 characterized in that water is periodically removed from the brine to reconcentrate it.

4. A method according to claim 3 characterized in that the removal of the water occurs in a seasonal cycle.

5. A method according to claim 3 characterized in that brine from the reservoir (60) is heated to remove water therefrom.

6. A method according to claim 3 characterized in that reconcentration of the brine is carried out in a solar evaporating pond (60).

7. A method according to claim 3 characterized in that evaporation is accomplished by exposing the brine to ambient air.

8. A method according to claim 5 characterized in that the brine is contacted with the air in the enclosure (50) by spraying the brine into the air.

9. A method according to claim 5 characterized in that the brine is contacted with the air in the enclosure (50) by producing a film of brine that is in contact with the air.

10. A method according to claim 9 characterized in that the film of brine is created on web material (132) that exhibits capillary action.

11. A method according to claim 1 characterized in that the source of water vapor in the air in the enclosure (50) is from a warm water aquifer (131).

12. Apparatus for heating the air in an enclosure (50) during the night using heat extracted from the air in the enclosure (50) during the day, comprising;
    a reservoir (60) of brine which is hygroscopic with respect to the air in an enclosure (50),
    a direct contact heat exchanger (56) associated with the air in the enclosure (50),and
    means for exchanging brine between the reservoir (60) and the heat exchanger (56), characerised by:
    the brine being hygroscopic with respect to the air in the enclosure (50) during the day, and being warmer than the air in the enclosure (50) during the night;
    the said means being arranged for exchanging brine between the reservoir (60) and the heat exchanger (56) during both the day and night; and
    the reservoir (60) being constructed and arranged such that the latent heat of condensation absorbed by the hygroscopic brine from the air in the enclosure during the day in response to condensation of water vapor in the air on the brine is accumulated and stored in the reservoir during the day and returned to the air in the enclosure during the night.

13. Apparatus according to claim 12 characterized by the brine being concentrated and by means (60) for periodically removing water from the brine to reconcentrate it.

14. Apparatus according to claim 13 characterized in that a solar evaporating pond (60) is the reservoir.

15. Apparatus according to claim 13 characterized in the provision of an air-brine-vapor direct contact heat exchanger (158) located outside the enclosure for removing water from the brine to reconcentrate it.

**Revendications**

1. Procédé pour le conditionnement d'air, contenant de la vapeur d'eau, dans une enceinte (50) par échange d'un fluide entre un réservoir (60) et un échangeur de chaleur (56) qui est situé dans l'enceinte (50), comprenant les phases consistant à utiliser le fluide pour extraire la chaleur de l'air dans l'enceinte (50) pendant une première période, stocker la chaleur extraite dans le fluide dans le réservoir (60) et utiliser le fluide et l'échangeur de chaleur (56) pour ramener la chaleur stockée jusqu'à l'air dans l'enceinte (50) pendant une seconde période sans ajouter de vapeur d'eau dans l'air, caractérisé en ce que le fluide est de la saumure, l'échangeur de chaleur (56) est du type à contact direct, la première période est le jour, la seconde période est la nuit et en ce que la saumure est traiée pour rester hygroscopique pendant le jour.

2. Procédé selon la revendication 1 caractérisé en ce que la saumure est concentrée.

3. Procédé selon la revendication 2 caractérisé en ce que l'eau est périodiquement extraite de la saumure pour la reconcentrer.

4. Procédé selon la revendication 3 caractérisé en ce que l'extraction de l'eau se fait selon un cycle saisonnier.

5. Procédé selon la revendication 3 caractérisé en ce que la saumure dans le réservoir (60) est chauffée pour en extraire l'eau.

6. Procédé selon la revendication 3 caractérisé en ce que la reconcentration de la saumure est effectuée dans un bassin solaire d'évaporation (60).

7. Procédé selon la revendication 3 caractérisé en ce que l'évaporation est effectuée en exposant la saumure à l'air ambiant.

8. Procédé selon la revendication 5 caractérisé en ce que la saumure est mise en contact avec l'air dans l'enceinte (50) en pulvérisant la saumure dans l'air.

9. Procédé selon la revendication 5 caractérisé en ce que la saumure est mise en contact avec l'air dans l'enceinte (50) en produisent Un film de saumure qui est en contact avec l'air.

10. Procédé selon la revendication 9 caractérisé en ce que le film de saumure est créé sur un matériau non-tissé (132) qui présente une capillarité.

11. Procédé selon la revendication 1 caractérisé en ce que la source de vapeur d'eau dans l'air dans l'enceinte (50) provient d'une zone aquifère d'eau chaude (131).

12. Appareil pour chauffer l'air dans une enceinte (50) pendant la nuit en utilisant la chaleur extraite de l'air dans l'enceinte (50) pendant le jour, comprenant :
un réservoir (60) de saumure qui est hygroscopique par rapport à l'air dans une enceinte (50),
un échangeur de chaleur à contact direct (56) associé à l'air dans l'enceinte (50), et
un moyen pour l'échange de la saumure entre le réservoir (60) et l'échangeur de chaleur (56), caractérisé en ce que :
la saumure est hygroscopique par rapport à l'air dans l'enceinte (50) pendant le jour, et est plus chaude que l'air dans l'enceinte (50) pendant la nuit;
ledit moyen est agencé pour l'échange de la saumure entre le réservoir (60) et l'échangeur de chaleur (56) pendant le jour et la nuit; et
le réservoir (60) est construit et agencé de manière que la chaleur latente de condensation absorbée par la saumure hygroscopique à partir de l'air dans l'enceinte pendant le jour en réponse à la condensation de vapeur d'eau dans l'air sur la saumure est accumulée et stockée dans le réservoir pendant le jour et ramenée dans l'air dans l'enceinte pendant la nuit.

13. Appareil selon la revendication 12 caractérisé par la saumure qui est concentrée et par un moyen (60) pour extraire périodiquement l'eau de la saumure pour la reconcentrer.

14. Appareil selon la revendication 13 caractérise en ce qu'un bassin solaire d'évaporation (60) est le réservoir.

15. Appareil selon la revendication 13 caractérisé par la fourniture d'un échangeur de chaleur (158) à contact direct air-saumure-vapeur situé à l'extérieur de l'enceinte pour extraire l'eau de la saumure pour la reconcentrer.

## Ansprüche

1. Ein Verfahren für die Konditionierung von Wasserdampf enthaltender Luft in einer geschlossenen Umgebung (50) durch Austauschen eines Fluids zwischen einem Vorratsbehälter (60) und einem Wärmeaustauscher (56), welcher in der geschlossenen Umgebung (50) angeordnet ist, mit den Verfahrensschritten:

Verwenden des Fluids, um Wärme aus der Luft in der geschlossenen Umgebung (50) während einer ersten Periode zu ziehen,

Speichern der abgezogenen Wärme in dem Fluid in dem Vorratsbehälter (60), und

Verwenden des Fluids und des Wärmeaustauschers (56), um die gespeicherte Wärme in die Luft in der geschlossenen Umgebung (50) während einer zweiten Periode ohne Hinzufügung von Wasserdampf zu der Luft zurückzuführen, **dadurch gekennzeichnet,**

daß als Fluid Salzwasser ausgewählt wird, daß ein Wärmeaustauscher (56) vom Direkt-Kontakt-Typ ausgewählt wird, daß als die erste Periode der Tag ausgewählt wird, daß als die zweite Periode die Nacht ausgewählt wird, und daß für das Salzwasser vorgesehen wird, das es während des Tages hygroskopisch bleibt.

2. Ein Verfahren nach Anspruch 1, **dadurch gekennzeichnet,** daß das Salzwasser konzentriert ist.

3. Ein Verfahren nach Anspruch 2, **dadurch gekennzeichnet,** daß von dem Salzwasser, um es zu konzentrieren, periodisch Wasser entfernt wird.

4. Ein Verfahren nach Anspruch 3, **dadurch gekennzeichnet,** daß das Entfernen des Wassers in einem saisonalen Zyklus erfolgt.

5. Ein Verfahren nach Anspruch 3, **dadurch gekennzeichnet,** daß Salzwasser aus dem Vorratsbehälter (60) aufgeheizt wird, um Wasser davon zu entfernen.

6. Ein Verfahren nach Anspruch 3, **dadurch gekennzeichnet,** daß die Rekonzentration des Salzwassers in einem Solarverdampfungsbekken (60) durchgeführt wird.

7. Ein Verfahren nach Anspruch 3, **dadurch gekennzeichnet,** daß eine Verdampfung ausgeführt wird, indem das Salzwasser der Umgebungsluft ausgesetzt wird.

8. Ein Verfahren nach Anspruch 5, **dadurch gekennzeichnet,** daß das Salzwasser mit der Luft in der geschlossenen Umgebung (50) durch Sprühen des Salzwassers in die Luft in Kontakt gebracht wird.

9. Ein Verfahren nach Anspruch 5, **dadurch gekennzeichnet,** daß das Salzwasser mit der Luft in der geschlossenen Umgebung (50) durch Erzeugen eines Salzwasserfilms, der in Kontakt mit der Luft ist, in Kontakt gebracht wird.

10. Ein Verfahren nach Anspruch 9, **dadurch gekennzeichnet,** daß der Salzwasserfilm auf einem Gewebematerial (132), welches Kapillarwirkung zeigt, erzeugt wird.

11. Ein Verfahren nach Anspruch 1, **dadurch gekennzeichnet,** daß die Wasserdampfquelle in der Luft in der geschlossenen Umgebung (50) durch eine warmes Wasser führende Schicht (131) gebildet ist.

12. Vorrichtung zur Heizung der Luft in einer geschlossenen Umgebung (50) während der Nacht unter Verwendung von der Luft während des Tags entzogener Wärme, mit:

einem Vorratsbehälter (60) für Salzwasser, welches hygroskopisch in bezug auf die Luft in der geschlossenen Umgebung (50) ist,

einem Direktkontakt-Wärmeaustauscher (56), der mit der Luft in der geschlossenen Umgebung (50) verbunden ist, und

einer Einrichtung zum Austausch von Salzwasser zwischen dem Speicherbehälter (60) und dem Wärmeaustauscher (56) **dadurch gekennzeichnet,**

daß das Salzwasser in bezug auf die Luft in der geschlossenen Umgebung (50) während des Tages hygroskopisch und wärmer als die Luft in der geschlossenen Umgebung (50) während der Nacht ist;

daß die Austauscheinrichtung für den Austausch von Salzwasser zwischen dem Vorrratsbehälter (60) und dem Wäremaustauscher (56) sowohl während des Tages als auch während der Nacht vorgesehen ist; und

daß der Vorratsbehälter (60) derart konstruiert und vorgesehen ist, daß die latente Kondensationswärme, die durch das hygroskopische Salzwasser aus der Luft in der geschlossenen Umgebung während des Tages in Reaktion auf die Kondensation von Wasserdampf in Luft auf dem Salzwasser absorbiert worden ist, in dem Vorratsbehälter während des Tages gesammelt und gespeichert und der Luft in der geschlossenen Umgebung während der Nacht wieder zugeführt wird.

13. Eine Vorrichtung nach Anspruch 12, **dadurch gekennzeichnet,** daß das Salzwasser konzentriert ist, und daß eine Einrichtung (60) zum periodischen Entfernen von Wasser aus dem Salzwasser, um seine Konzentration zu erhöhen, vorgesehen ist.

14. Vorrichtung nach Anspruch 13, **dadurch gekennzeichnet,** daß der Vorratsbehälter ein Sonnenverdampfungsbecken (60) ist.

15. Vorrichtung nach Anspruch 13, **dadurch gekennzeichnet,** daß ein Luft-Salzwasser-Dampf-Direktkontakt-Wärmeaustaucher (158), der außerhalb der geschlossenen Umgebung zum Entfernen von Wasser aus dem Salzwasser, um es zu rekonzentrieren, angeordnet ist, vorgesehen ist.

FIG.1

TIME | d | DENSITY
--- | --- | ---
END OF SUMMER | 1.1m | 1350 Kg/m$^3$
END OF WINTER | 1.7m | 1230 Kg/m$^e$

EP 0 123 447 B1

ENCLOSED
ENVIRONMENT
112

BRINE—VAPOR.

AIR—HEAT EXCUANGER

110

114

BRINE RESERVOIR

116

HEAT + HUMIDITY

SOURCES

FIG.2

128    120    130    P    124    127    126    129    131

FIG. 3A

EP 0 123 447 B1

FIG. 3 B

FIG. 4A

FIG. 4B

172

174

BVAH

B.R.

SOLAR DISTRIBTUOR

# FIG. 4C

180

EA

B.R.

177

178

BRINE
AQUIFER

176

# FIG. 4D